# EUROPEAN PATENT SPECIFICATION

(11) **EP 4 288 475 B1**
(45) Date of publication and mention of the grant of the patent: **15.07.2026**
(21) Application number: 22704124.1
(22) Date of filing: 24.01.2022
(51) Int. Cl.: C08G 18/28, C09D 201/10, C08G 18/38, C09D 175/02

(54) **METHODS OF MANUFACTURING ONE-COMPONENT COATING COMPOSITIONS**
VERFAHREN ZUR HERSTELLUNG VON EINKOMPONENTEN-BESCHICHTUNGSZUSAMMENSETZUNGEN
PROCÉDÉS DE FABRICATION DE COMPOSITIONS DE REVÊTEMENT À UN CONSTITUANT

(30) Priority: 03.02.2021 US 202163145194 P
(43) Date of publication of application: 13.12.2023
(60) Divisional application: 26178353.4
(73) Proprietor: Covestro LLC, Pittsburgh, PA 15205 (US)
(72) Inventor: WANG, Daniel P., Pittsburgh, Pennsylvania 15205 (US); BEST, Kurt E., Wexford, Pennsylvania 15090 (US); KLEER, Joseph R., Crescent, Pennsylvania 15046 (US); BRANDT, John F., Pittsburgh, Pennsylvania 15237 (US)
(74) Representative: Levpat
(86) International application number: PCT/US2022/013484
(87) International publication number: WO 2022/169621

(56) References cited:
- US-A1- 2011 170 196
- US-A1- 2020 347 183
- US-A1- 2020 354 570
- ANONYMOUS: "Product Guide L-G 1 Paint Additives", BYK ADDITIVES & INSTRUMENTS, 1 February 2009 (2009-02-01), pages 1 - 15, XP055767003, Retrieved from the Internet <URL:https://www.pcimag.com/ext/resources/VirtualBrochure/BYK_Additives.pdf> [retrieved on 20210120]

## Description

### BACKGROUND

Compositions based on isocyanate chemistry find utility as components in coatings, such as, for example, paints, primers, and the like. Isocyanate-based coating compositions may include, for example, polyurethane or polyurea coatings formed from resins comprising components, such as, for example, diisocyanates, polyisocyanates, isocyanate reaction products, the like, or a combination thereof. These resins may cure by various mechanisms so that covalent bonds form between the resin components, thereby producing a cross-linked polymer network.

As one specific example, moisture-curing polyurethane coating systems can react with atmospheric water at room temperature to form films. These films can be produced without the use of heat or other energy-intensive curing mechanisms. However, there can be some challenges in such coating systems due to their high sensitivity to water. For example, some additives that can be desirable to include in moisture-curing coating formulations carry an amount of water that can cause the coating system to crosslink prematurely. Thus, in many cases, moisture-curing polyurethanes are formulated as two-component (2K) coating systems to avoid this issue, where the isocyanate-reactive components are combined with the polyisocyanate only shortly prior to mixing. However, 2K coating systems can be cumbersome to use and mixing errors can occur that can deteriorate the expected performance of the coating. As such, there is a need for improved methods of preparing one-component (1K) moisture-curing polyurethanes that do not prematurely crosslink in the container.

US 2020/347183 A1 and US 2020/354570 A1 disclose coating compositions comprising a non-reactive resin, a water-containing additive, a drying agent, a solvent, a silane-modified polyurea and a catalyst. These documents do not discloses a grinding step for the manufacturing of a one-component coating composition.

### DETAILED DESCRIPTION

Although the following detailed description contains many specifics for the purpose of illustration, a person of ordinary skill in the art will appreciate that many variations and alterations to the following details can be made and are considered to be included herein. Accordingly, the following embodiments are set forth without any loss of generality to, and without imposing limitations upon, any claims set forth. It is also to be understood that the terminology used herein is for the purpose of describing particular embodiments only, and is not intended to be limiting. Unless defined otherwise, all technical and scientific terms used herein have the same meaning as commonly understood by one of ordinary skill in the art to which this disclosure belongs.

As used in this written description, the singular forms "a," "an" and "the" include express support for plural referents unless the context clearly dictates otherwise. Thus, for example, reference to "a polymer" or "the polymer" can include a plurality of such polymers.

In this application, "comprises", "comprising", "containing" and "having" can mean "includes", "including", and are generally interpreted to be open ended terms. The terms "consisting of" or "consists of" are closed terms, and include only the components, structures, steps, specifically listed in conjunction with such terms. "Consisting essentially of" or "consists essentially of" generally closed terms, with the exception of allowing inclusion of additional items, materials, components, steps, or elements, that do not materially affect the basic and novel characteristics or function of the item(s) used in connection therewith. For example, trace elements present in a composition, but not affecting the compositions nature or characteristics would be permissible if present under the "consisting essentially of" language, even though not expressly recited in a list of items following such terminology. When using an open ended term, like "comprising" or "including," in this written description it is understood that direct support should be afforded also to "consisting essentially of" language as well as "consisting of" language as if stated explicitly and vice versa.

The terms "first", "second", "third", "fourth" in the description and in the claims, if any, are used for distinguishing between similar elements and not necessarily for describing a particular sequential or chronological order. It is to be understood that any terms so used are interchangeable under appropriate circumstances such that the embodiments described herein are, for example, capable of operation in sequences other than those illustrated or otherwise described herein. Similarly, if a method is described herein as comprising a series of steps, the order of such steps as presented herein is not necessarily the only order in which such steps may be performed, and certain of the stated steps may possibly be omitted and/or certain other steps not described herein may possibly be added to the method.

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result. For example, a composition that is "substantially free of" particles would either completely lack particles, or so nearly completely lack particles that the effect would be the same as if it completely lacked particles. In other words, a composition that is "substantially free of" an ingredient or element may still actually contain such item as long as there is no measurable effect thereof.

As used herein, the term "about" is used to provide flexibility to a numerical range endpoint by providing that a given value may be "a little above" or "a little below" the endpoint. Unless otherwise stated, use of the term "about" in accordance with a specific number or numerical range should also be understood to provide support for such numerical terms or range without the term "about". For example, for the sake of convenience and brevity, a numerical range of "about 50 milligrams to about 80 milligrams" should also be understood to provide support for the range of "50 milligrams to 80 milligrams." Furthermore, it is to be understood that in this specification support for actual numerical values is provided even when the term "about" is used therewith. For example, the recitation of "about" 30 should be construed as not only providing support for values a little above and a little below 30, but also for the actual numerical value of 30 as well. Unless otherwise specified, all numerical parameters are to be understood as being prefaced and modified in all instances by the term "about," in which the numerical parameters possess the inherent variability characteristic of the underlying measurement techniques used to determine the numerical value of the parameter.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "1 to 5" should be interpreted to include not only the explicitly recited values of 1 to 5, but also include individual values and sub-ranges within the indicated range. Thus, included in this numerical range are individual values such as 2, 3, and 4 and sub-ranges such as from 1-3, from 2-4, and from 3-5, etc., as well as 1, 2, 3, 4, and 5, individually.

This same principle applies to ranges reciting only one numerical value as a minimum or a maximum. Furthermore, such an interpretation should apply regardless of the breadth of the range or the characteristics being described.

Reference throughout this specification to "an example" means that a particular feature, structure, or characteristic described in connection with the example is included in at least one embodiment. Thus, appearances of the phrases "in an example" in various places throughout this specification are not necessarily all referring to the same embodiment.

### Invention Embodiments

The present application is directed to one-component (1K) moisture-curing coating compositions based on a silane-modified polyurea and methods of preparing the same. For 1K moisture-curing coating compositions, in-can or in-container stability can be used to determine the reliability of the product. For example, because the curing mechanism is facilitated by water, any residual water in the components added to the coating composition can cause the coating composition to cure prematurely. Thus, various moisture-reducing processes can be employed to prepare and stabilize the 1K coating composition.

In further detail, the 1K moisture-curing coating compositions can include a variety of water-containing additives, such as pigments, thixotropic agents, dispersing agents, leveling agents, defoamers, deaerators, antioxidants, light stabilizers, water scavengers, thickeners, flame retardants, or a combination thereof.

Water-containing additives can be added to the coating composition in various amounts. In some examples, the water-containing additives can be included in the coating composition in an amount of from 10 wt% to 55 wt% based on a total weight of the coating composition. In other examples, water-containing additives can be included in the coating composition in an amount of from 25 wt% to 45 wt%, from 30 wt% to 50 wt%, or from 35 wt% to 55 wt% based on a total weight of the coating composition.

In some specific examples, the 1K moisture-curing coating compositions can include a pigment. The type or color of pigment or pigment combinations is not particularly limited. The pigment can be included in the coating compositions in a variety of amounts. In some examples, the pigment can be included in the coating composition in an amount of from 5 wt% to 50 wt% based on a total weight of the coating composition. In other examples, the pigment can be included in the coating composition in an amount of from 10 wt% to 30 wt%, from 15 wt% to 35 wt%, from 20 wt% to 40 wt%, from 25 wt% to 45 wt%, or from 30 wt% to 50 wt% based on a total weight of the coating composition

The water-containing additives can be added to and dispersed in a non-reactive resin to form a grinding dispersion. As used herein, "non-reactive resin" means any resin that is non-reactive to urethane, urea, or siloxane groups in the coating composition under ambient reaction conditions. "Ambient reaction conditions" refers to the prevailing temperature, pressure, and relative humidity of the surrounding environment.

In some examples, non-reactive resins can improve the grinding process for the water-containing additives. Specifically, non-reactive resins can improve the shear on agglomerates to facilitate grinding of water-containing additives to a finer level as compared to grinding in a solvent. Further, the viscous nature of the non-reactive resin can minimize re-agglomeration of the water-containing additives after grinding as compared to grinding in a solvent.

A variety of non-reactive resins can be used to form the additive dispersion. Non-limiting examples of non-reactive resins can include acrylic resins, polyester resins, carbamic resins, aldehyde resins, or a combination thereof. In some specific examples, the non-reactive resin can be a carbamic resin based on butylurethane and formaldehyde. In some examples, the non-reactive resin can be fluid at 23 °C. In some cases, where the non-reactive resin is a solid at 23 °C, the non-reactive resin can excessively increase the initial viscosity of the coating composition.

In some examples, the non-reactive resin can be employed as a 100% solids component, by weight. In other examples, the non-reactive resin can be predispersed in a compatible solvent to from 40% to 99% solids, 45% to 95%, or 50% to 90%, or from 60% to 80% based on a total weight of the non-reactive resin and diluent. In some cases, for example, predispersing the non-reactive resin in a compatible solvent can improve ease of handling of the grinding dispersion.

Generally, the non-reactive resin can be included in the coating composition in an amount of less than 25 wt% based on a total resin weight of the coating composition. By "total resin weight" it is meant the total amount of polymers or oligomers present in the coating composition, except for those that may be used specifically as drying agents (e.g., polymers or oligomers that are added to the coating composition in an amount based on measured or calculated water content present in the coating composition). In some additional examples, the non-reactive resin can be included in the coating composition in an amount of from 5 wt% to 25 wt% based on a total resin weight of the coating composition. In still additional examples, the non-reactive resin can be included in the coating composition in an amount of from 5 wt% to 15 wt%, from 8 wt% to 18 wt%, from 10 wt% to 20 wt%, or from 12 wt% to 22 wt% based on a total resin weight of the coating composition.

The grinding dispersion can be ground using a suitable grinder until a Hegman value of at least 3, at least 4, at least 5, at least 6 ,or at least 7 is achieved to form a ground dispersion, in accordance with ASTM D1210-05.

The ground dispersion can be diluted with a suitable solvent to form a ground slurry. Non-limiting examples, of solvents can include methyl n-amyl ketone, C9-C10 aromatic hydrocarbon solvents, ethyl 3-ethoxypropionate, butyl acetate, 1-methoxy-2-propyl acetate, 2-ethylhexanol, acetone, 2-butanone, methyl isobutyl ketone, ethyl acetate, 3-methoxy-1-butyl acetate, propylene n-butyl ether, toluene, methyl ethyl ketone, xylene, 1,4-dioxane, diacetone alcohol, N-methylpyrrolidone, dimethylacetamide, dimethylformamide, dimethyl sulfoxide, solvent naphtha (hydrocarbon mixture), or a combination thereof.

As previously mentioned, the relatively higher viscosity of the non-functional resin can provide an improved shearing environment in which to grind the water-containing additives as compared to grinding in solvent or other comparable low-viscosity environments. As such, the solvent is typically added, if at all, after grinding the dispersion. Adding the solvent at this stage can provide a number of benefits. In some cases, for example, the solvent can facilitate drying the ground dispersion. Further, in some examples, addition of solvent to the ground dispersion can reduce the overall viscosity of the final coating composition for ease of application. Typically, an amount of total solvent added to the coating composition does not exceed 250 grams per liter (g/L) based on a total weight of the coating composition. In still other examples, the total solvent added to the coating composition does not exceed 220 g/L, 200 g/L, 180 g/L, or 150 g/L based on a total weight of the coating composition.

The ground slurry can be evaluated to determine water content by Karl Fischer titration (ASTM D6304-16e1) or other suitable water quantification technique. Based on the determined water content in the ground slurry, an appropriate amount of drying agent can be added to dry the slurry. It is important that the drying agent be added to the slurry after grinding of the additives in the dispersion to maximize the extent to which water molecules entrapped in the additives are released into the dispersion/slurry. The drying agent can then have maximum effect in drying the slurry.

The amount of drying agent can depend on the particular drying agent employed. However, the amount can generally be based on an approximately stoichiometrically equivalent amount of drying agent relative to the amount of water determined to be present in the ground slurry (e.g., by Karl Fischer titration). A variety of suitable drying agents can be used to dry the slurry. Non-limiting examples can include p-toluenesulfonyl isocyanate (PTSI), hexamethylene diisocyanate (HDI) monomer, isophorone diisocyanate (IPDI) monomer, low-functionality HDI-based isocyanates (e.g., DESMODUR LD), bifunctional organosilanes (e.g., DYNASYLAN VTEO), orthoformates (e.g., ADDITIVE OF), or a combination thereof.

Generally, the drying agent can be mixed with the slurry for a sufficient period of time to achieve a water content in the slurry of less than or equal to 3000 parts per million (ppm). In some additional examples, the drying agent can be mixed with the slurry for a sufficient period of time to achieve a water content in the slurry of less than or equal to 2800 ppm, less than or equal to 2500 ppm, less than or equal to 2200 ppm, less than or equal to 2000 ppm, or less than or equal to 1800 ppm.

The dried slurry can be combined with a silane-modified polyurea and optional crosslinking catalyst to form a 1K moisture-curing coating composition. The silane-modified polyurea compound can be prepared via reaction of a polyisocyanate based on isophorone diisocyanate and having isocyanurate and allophanate structural units with an aminosilane of general formula (I):

R¹ₐ(R¹O)₍₃₋ₐ₎Si(CH₂)ₙNHCHR²CH₂COOR³ (I)

where the radicals R¹ independently of one another are selected from C₁-C₂₀-alkyl or C₆-C₂₀-aryl,
a is an integer between 0 and 2,
n is an integer between 1 and 4,
R² is selected from H, C₁-C₂₀-alkyl, C₆-C₁₂-aryl and -COOR³, and
R³ in each case is C₁-C₂₀-alkyl.

The silane-modified polyurea compounds have a low content of free isocyanate groups. The content of free isocyanate groups is generally less than 0.2% by weight. In some examples, the content of free isocyanate groups can be less than 0.01% by weight, or less than 0.001% by weight. In some specific examples, the silane-modified polyurea compounds do not have any free isocyanate groups within the precision of detection. The content of free isocyanate groups can be determined in accordance with DIN EN ISO 11909:2007-05.

The silane-modified polyurea compounds additionally have a high proportion of silane groups, based on the weight of the compound. This can improve the curing properties of coating compositions which comprise the silane-modified polyurea compounds as binders. The silane-modified polyurea compounds are therefore suitable in particular for the production of quick-drying coatings.

The proportion of silane groups based on the weight of the silane-modified polyurea compounds is typically reported as the proportion of silicon based on the weight of the compound. In some examples, the amount of silane groups can be from 0.1% to 10% by weight, from 1% to 7% by weight, or from 1.5% to 5% by weight. The silicon content may be calculated from the amount of the aminosilane used to prepare the silane-modified polyurea compounds. The silicon content may also be determined by way of inductively coupled plasma atomic emission spectrometry (ICP-OES).

The silane-modified polyurea compounds generally have a number-average molecular weight of 300 to 6000 g/mol. In some additional examples, the silane-modified polyurea compounds can have a number-average molecular weight of from 800 to 4000 g/mol, from 1000 to 3000 g/mol, or from 1000 to 2000 g/mol. The weight-average molecular weight can be from 500 to 5000 g/mol, from 800 to 3000 g/mol, or from 1000 to 3000 g/mol. The number-average/weight-average molecular weight can be ascertained by means of gel permeation chromatography (GPC) in accordance with DIN 55672-1:2016-03 using THF as eluent against a polystyrene standard.

In some examples, the silane-modified polyurea compounds can have further urea/urethane groups obtained via reaction of a portion of the isocyanate groups of the polyisocyanate with a dialkylamine and/or an alcohol. The proportion of silane-modified end groups can be adjusted in this way.

A variety of alcohols can be employed. In some examples, the alcohols can include aliphatic alcohols having 1 to 20 carbon atoms, which also includes alkoxylated alcohols comprising ether groups. In some specific examples, the alcohols can include aliphatic alcohols having 1 to 16 carbon atoms. In some additional examples, the alcohols can include monoalcohols. Additional examples of suitable alcohols can include methanol, ethanol, n- and isopropanol, n-butanol, ethylene glycol monobutyl ether, 2-ethylhexanol, 1-octanol, 1-dodecanol, 1-hexadecanol, or a combination thereof

The alcohols used can also be polyols, which may result in a pre-crosslinking of the polyisocyanate molecules. However, the silane-modified polyurea compounds are generally uncrosslinked and no polyols are used.

Where employed, a variety of polyols can be used. Generally, the polyols used can have a number-average molecular weight Mₙ of 400 to 8000 g/mol, from 400 to 6000 g/mol, and from 400 to 3000 g/mol. In some additional examples, the polyols can have a hydroxyl number of from 22 to 700 mg KOH/g, from 30 to 300 mg KOH/g, or from 40 to 250 mg KOH/g. In some additional examples, the polyols can have an OH functionality of from 1.5 to 6, from 1.7 to 5, or from 1.8 to 5.

Non-limiting examples of polyols that can be used are the organic polyhydroxyl compounds known in polyurethane coating technology, for example the standard polyester polyols, polyacrylate polyols, polyurethane polyols, polycarbonate polyols, polyether polyols, polyester polyacrylate polyols and polyurethane polyacrylate polyols, polyurethane polyester polyols, polyurethane polyether polyols, polyurethane polycarbonate polyols, polyester polycarbonate polyols, phenol/formaldehyde resins, or a combination thereof. In some specific examples, the polyols can include polyester polyols, polyether polyols, polyacrylate polyols, polycarbonate polyols, or a combination thereof.

Polyether polyols include, for example, the polyaddition products of the styrene oxides, of ethylene oxide, of propylene oxide, of tetrahydrofuran, of butylene oxide, of epichlorohydrin, and the mixed addition and grafting products thereof, and the polyether polyols obtained by condensation of polyhydric alcohols or mixtures thereof and those obtained by alkoxylation of polyhydric alcohols, amines and amino alcohols.

Suitable hydroxy-functional polyethers have OH functionalities of 1.5 to 6.0 or 1.8 to 5, OH numbers of 22 to 700 or 40 to 600 mg KOH/g of solids, and molecular weights Mₙ of 106 to 4000 g/mol or 200 to 3500 g/mol, for example alkoxylation products of hydroxy-functional starter molecules such as ethylene glycol, propylene glycol, butanediol, hexanediol, trimethylolpropane, glycerol, pentaerythritol, sorbitol or mixtures of these and also other hydroxy-functional compounds with propylene oxide or butylene oxide.

Examples of polyester polyols that are of good suitability are the polycondensates, known per se, of di- and optionally tri- and tetraols and di- and optionally tri- and tetracarboxylic acids or hydroxycarboxylic acids or lactones. Instead of the free polycarboxylic acids, it is also possible to use the corresponding polycarboxylic anhydrides or corresponding polycarboxylic esters of lower alcohols to prepare the polyesters. Examples of suitable diols are ethylene glycol, butylene glycol, diethylene glycol, triethylene glycol, polyalkylene glycols such as polyethylene glycol, and also propane-1,2-diol, propane-1,3-diol, butane-1,3-diol, butane-1,4-diol, hexane-1,6-diol and isomers, neopentyl glycol or neopentyl glycol hydroxypivalate. In order to achieve a functionality > 2, it is optionally possible to use proportions of polyols having a functionality of 3, for example trimethylolpropane, glycerol, erythritol, pentaerythritol, trimethylolbenzene or trishydroxyethyl isocyanurate.

Useful dicarboxylic acids include, for example, phthalic acid, isophthalic acid, terephthalic acid, tetrahydrophthalic acid, hexahydrophthalic acid, cyclohexanedicarboxylic acid, adipic acid, azelaic acid, sebacic acid, glutaric acid, tetrachlorophthalic acid, maleic acid, fumaric acid, itaconic acid, malonic acid, suberic acid, 2-methylsuccinic acid, 3,3-diethylglutaric acid, 2,2-dimethylsuccinic acid. Anhydrides of these acids are likewise usable, where they exist. For the purposes of the present disclosure, the anhydrides are consequently covered by the expression "acid". It is also possible to use monocarboxylic acids such as benzoic acid and hexanecarboxylic acid, provided that the mean functionality of the polyol is ≥ 2. In some specific examples, saturated aliphatic or aromatic acids can be used, such as adipic acid or isophthalic acid. One example of a polycarboxylic acid for optional additional use in smaller amounts is trimellitic acid.

Examples of hydroxycarboxylic acids that may be used as co-reactants in the preparation of a polyester polyol having terminal hydroxyl groups include hydroxycaproic acid, hydroxybutyric acid, hydroxydecanoic acid, hydroxystearic acid. Usable lactones include ε-caprolactone, butyrolactone, or homologs thereof.

In some specific examples, polyester polyols based on butanediol and/or neopentyl glycol and/or hexanediol and/or ethylene glycol and/or diethylene glycol with adipic acid and/or phthalic acid and/or isophthalic acid can be used.

Possible usable polyesters are also polycaprolactone polyols as are commercially available from Perstorp in the form of CAPA polycaprolactone polyols.

Some examples of useful polycarbonate polyols are obtained by reaction of carbonic acid derivatives, for example diphenyl carbonate, dimethyl carbonate or phosgene, with diols. Useful diols of this kind can include, for example, ethylene glycol, propane-1,2- and 1,3-diol, butane-1,3- and 1,4-diol, hexane-1,6-diol, octane-1,8-diol, neopentyl glycol, 1,4-bishydroxymethylcyclohexane, 2-methylpropane-1,3-diol, 2,2,4-trimethylpentane-1,3-diol, dipropylene glycol, polypropylene glycols, dibutylene glycol, polybutylene glycols, bisphenol A, tetrabromobisphenol A, but also lactone-modified diols. In some examples, the diol component contains 40% to 100% by weight of hexane-1,6-diol and/or hexanediol derivatives, such as, for example, those having not only terminal OH groups but also ether or ester groups, for example products which are obtained by reaction of 1 mol of hexanediol with at least 1 mol of ε-caprolactone, or by etherification of hexanediol with itself to give di- or trihexylene glycol. It is also possible to use polyether polycarbonate polyols.

In some specific examples, polycarbonate polyols based on dimethyl carbonate and hexanediol and/or butanediol and/or ε-caprolactone can be used. In some additional specific examples, polycarbonate polyols based on dimethyl carbonate and hexanediol and/or ε-caprolactone can be used.

Instead of the above-described polymeric polyether, polyester or polycarbonate polyols, it is also possible to use low molecular weight polyols in the molar mass range from 62 - 400 g/mol for the preparation of the silane-modified polyurea compounds. Suitable low molecular weight polyols are short-chain, i.e. containing 2 to 20 carbon atoms, aliphatic, araliphatic or cycloaliphatic diols or triols. Examples of diols are ethylene glycol, diethylene glycol, triethylene glycol, tetraethylene glycol, dipropylene glycol, tripropylene glycol, propane-1,2-diol, propane-1,3-diol, butane-1,4-diol, neopentyl glycol, 2-ethyl-2-butylpropanediol, trimethylpentanediol, 2,2,4-trimethylpentane-1,3-diol, positionally isomeric diethyloctanediols, 1,3-butylene glycol, cyclohexanediol, cyclohexane-1,4-dimethanol, hexane-1,6-diol, cyclohexane-1,2- and -1,4-diol, hydrogenated bisphenol A (2,2-bis(4-hydroxycyclohexyl)propane), 2,2-dimethyl-3-hydroxypropyl 2,2-dimethyl-3-hydroxypropionate. Examples of suitable triols are trimethylolethane, trimethylolpropane or glycerol. The stated polyols can be used alone or in a mixture.

The dialkylamine used can be a compound of the formula NH(R⁴)₂, where R⁴ in each case is C₁-C₆-alkyl. In some examples, the dialkylamine is di-n-butylamine.

The silane-modified polyurea compounds are based on a polyisocyanate based on isophorone diisocyanate and having isocyanurate and allophanate groups. This is an oligomeric polyisocyanate which is prepared starting from isophorone diisocyanate by means of methods known per se. A portion of the isocyanate groups present in the isophorone diisocyanate are subjected to a trimerization reaction in the presence of a suitable catalyst. An alkanol is added to the reaction mixture before, during and/or following the trimerization, so that a portion of the isocyanate groups react with the alkanol via the corresponding urethane stage to give the allophanate. The details of this preparation process are known to those skilled in the art and by way of example are disclosed in EP 0 649 866 A1.

The alkanol used here can be an aliphatic alcohol having 1 to 6 carbon atoms or mixtures of these alcohols. Examples of suitable alcohols are methanol, ethanol, n- and isopropanol, n-butanol, n-pentanol, 2-ethyl-1-hexanol, 1-octanol, 1-dodecanol, 1-hexadecanol. In some examples, a mixture comprising n-butanol is used. In some specific examples, a mixture comprising n-butanol and n-pentanol is used.

In some examples, the polyisocyanate has a content of isocyanate groups of 8% to 20% by weight, from 10% to 18% by weight, or from 10% to 15% by weight.

In some additional examples, the polyisocyanate has a content of isocyanurate groups, calculated as C₃N₃O₃ (molecular weight 126 g/mol), of 3.5% to 24% by weight, or of 7% to 17% by weight.

In still additional examples, the polyisocyanate has a content of allophanate groups, calculated as C₂HN₂O₃ (molecular weight 101 g/mol), of 2.5% to 23% by weight, or of 5% to 16% by weight.

In yet additional examples, the polyisocyanate has a total content of isocyanate groups, isocyanurate groups, and allophanate groups of 28% to 51% by weight.

The polyisocyanate may also be used in the form of a mixture comprising further polyisocyanates. The proportion of pure polyisocyanate based on isophorone diisocyanate and having isocyanurate and allophanate groups in this mixture is generally at least 50% by weight, at least 60% by weight, or at least 75% by weight, in each case based on the total amount of pure polyisocyanate.

The silane-modified polyurea compounds also include silane groups which have been derived from secondary aminosilanes of general formula (I).

In some examples, the silane-modified polyurea compounds can include ethoxy or methoxysilane groups. Thus, in some examples, the radicals R¹ are ethyl or methyl. In some specific examples, the radicals R¹ are ethyl.

In some examples, the silane-modified polyurea compounds include dialkoxy- or trialkoxysilane groups. Where this is the case, a can be 0 or 1.

In some examples, the aminosilanes of formula (I) can be aminopropylsilanes with n = 3.

In some additional examples, the aminosilanes of formula (I) can be secondary aminosilanes which can be obtained by reaction of a primary aminosilane with esters of maleic acid, fumaric acid, or cinnamic acid. Accordingly, in some examples, R² can be C₆-C₁₂-aryl or -COOR³.

In some examples, the radical R³ can be a C₁-C₆-alkyl, for example methyl, ethyl, n- or isopropyl, n-butyl, isobutyl, sec-butyl, tert-butyl, n-pentyl, 2-pentyl or 3-pentyl. In some specific examples, R³ can be ethyl or methyl.

The silane-modified polyurea can be added to the moisture-curing one component coating composition in a variety of amounts. In some examples, the silane-modified polyurea can be added to the moisture-curing coating composition in an amount of from 30 wt% to 50 wt% based on a total weight of the moisture-curing coating composition. In some specific examples, the silane-modified polyurea can be added to the moisture-curing coating composition in an amount of from 30 wt% to 45 wt% or from 35 wt% to 50 wt%, based on a total weight of the moisture-curing coating composition.

As previously described the silane-modified polyurea compounds can be added to the dried slurry in combination with an optional catalyst. A variety of suitable catalysts can be employed in the 1K moisture-curing coating composition.

As described herein, a crosslinking catalyst refers to a compound which in the presence of water catalyzes the condensation reaction of the alkoxysilane groups of the polyurea compound according to the invention. Crosslinking catalysts used can be the catalysts known in the prior art. The catalyst may for example be a metal catalyst or a phosphorus-containing and/or nitrogen-containing compound.

In some examples, a the catalyst can include a metal catalysts such as Zn, Sn, Ti, Zr, or Al. In some specific examples, the catalyst can be or include organozinc compounds, organotin compounds, organotitanates, organozirconates, or organoaluminates. In some examples, the organotitanates, organozirconates and organoaluminates can have ligands such as an alkoxy group, sulfonate group, carboxylate group, dialkylphosphate group, dialkylpyrophosphate group, or acetylacetonate group, where all ligands may be identical or different from each other. Suitable metal catalysts have been described by way of example in US 2016/0244606 A1.

Examples of suitable phosphorus-containing catalysts are substituted phosphonic diesters and diphosphonic diesters, such as acyclic phosphonic diesters, cyclic phosphonic diesters, acyclic diphosphonic diesters, or cyclic diphosphonic diesters. Catalysts of this kind have been described by way of example in the German patent application DE-A-102005045228.

In some examples, substituted phosphoric monoesters and phosphoric diesters can be used, such as acyclic phosphoric diesters, cyclic phosphoric diesters, or amine adducts of phosphoric monoesters and diesters.

Acidic catalysts such as sulfonic acids can also be used as catalysts, as described in DE 102012204298. In addition, carboxylates can also be used, as likewise described in DE 102012204298.

In some examples, the catalyst can be or include the corresponding amine-blocked phosphoric esters, such as amine-blocked ethylhexyl phosphates, amine-blocked phenyl phosphates, or amine-blocked bis(2-ethylhexyl) phosphates.

Suitable examples of amines used to block the phosphoric esters can include tertiary amines, for example bicyclic amines, such as for example diazabicyclooctane (DABCO), 5-diazabicyclo[4.3.0]non-5-ene (DBN), 1,8-diazabicyclo[5.4.0]undec-7-ene (DBU), dimethyldodecylamine or triethylamine.

Suitable nitrogen-containing catalysts are for example amidines; amines such as in particular N-ethyldiisopropylamine, N,N,N',N'-tetramethylalkylenediamines, polyoxyalkyleneamines, 1,4-diazabicyclo[2.2.2]octane; aminosilanes such as 3-aminopropyltrimethoxysilane, 3-aminopropyldimethoxymethylsilane, N-(2-aminoethyl)-3-aminopropyltrimethoxysilane, N-(2-aminoethyl)-3-aminopropylmethyldimethoxysilane, N-(2-aminoethyl)-N'-[3-(trimethoxysilyl)propyl]ethylenediamine and analogs thereof having ethoxy or isopropoxy groups instead of methoxy groups on the silicon.

In some specific examples, the crosslinking catalysts are organotitanates and/or amidines. Non-limiting examples of organotitanates can include bis(ethylacetoacetato)diisobutoxytitanium(IV), bis(ethylacetoacetato)diisopropoxytitanium(IV), bis(acetylacetonato)diisopropoxytitanium(IV), bis(acetylacetonato)diisobutoxytitanium(IV), tris(oxyethyl)amineisopropoxytitanium(IV), bis[tris(oxyethyl)amine]diisopropoxytitanium(IV), bis(2-ethylhexane-1,3-dioxy)titanium(IV), tris[2-((2-aminoethyl)amino)ethoxy]ethoxytitanium(IV), bis(neopentyl(diallyl)oxydiethoxytitanium(IV), titanium(IV) tetrabutoxide, tetra(2-ethylhexyloxy)titanate, tetra(isopropoxy)titanate, or polybutyl titanate.

Non-limiting examples of amidines are in particular 1,8-diazabicyclo[5.4.0]undec-7-ene (DBU), 1,5-diazabicyclo[4.3.0]non-5-ene (DBN), 6-dibutylamino-1,8-diazabicyclo[5.4.0]undec-7-ene; methyltriazabicyclodecene, guanidines such as tetramethylguanidine, 2-guanidinobenzimidazole, acetylacetoneguanidine, 1,3-di-o-tolylguanidine, 1,3-diphenylguanidine, tolylbiguanidine, 2-tert-butyl-1,1,3,3-tetramethylguanidine; and imidazoles such as N-(3-trimethoxysilylpropyl)-4,5-dihydroimidazole and N-(3-triethoxysilylpropyl)-4,5-dihydroimidazole.

The crosslinking catalyst can be present in a variety of amounts. In some examples, the crosslinking catalyst can be pressing in an amount of from 0.001% to 5% by weight, from 0.005% to 2% by weight, or from 0.01% to 1% by weight, based on the total weight of the moisture-curing coating composition.

Generally, the moisture-curing coating composition can have an initial viscosity of from 60 Krebs units (KU) to 100 KU (0.3485 to 1.595 Pa-s) at 23 °C based on ISO 3219:2003. As used herein, "initial viscosity" or Vᵢ refers to the viscosity determined according to ISO 3219:2003, generally within the first 5 minutes after initial mixing the silane-modified polyurea and optional catalyst with the dried slurry. In some additional examples, the initial viscosity can be from 60 KU to 80 KU (0.3485 to 0.807 Pa-s), from 70 KU to 90 KU (0.561 to 1.141 Pa-s), or from 80 KU to 100 KU (0.807 to 1.595 Pa-s) at 23 °C based on ISO 3219:2003.

The moisture-curing coating composition can be applied to a variety of surfaces or surface portions to form a coating. The moisture-curing coating composition can be coated on a variety of substrates. Non-limiting examples of substrates can include metals, plastics, wood, cement, concrete, glass, or a combination thereof.

The moisture-curing coating composition can be applied by spraying, knife coating, curtain coating, vacuum coating, rolling, pouring, dipping, spin coating, squeegeeing, brushing, squirting, printing, or a combination thereof. Printing techniques can include screen, gravure, flexographic, or offset printing and also various transfer methods.

The moisture-curing coating composition can be applied to a substrate at a variety of coating thicknesses. For example, in some cases, the moisture-curing coating composition can be applied to a surface portion of a substrate at a coating thickness of from 1 thousandth of an inch (mil) to 16 mils. In other examples, the moisture-curing coating composition can be applied to a surface portion of a substrate at a coating thickness of from 0.025 mm ( 1 mil ) to 0.13 mm ( 5 mils), from 0.076 mm ( 3 mils ) to 0.2 mm ( 9 milt ) , from 0.15 mm ( 6 mils ) to 0.3 mm ( 12 mils), or, from 0.25 mm ( 10 mils ) to 0.4 mm ( 16 mils).

### Examples

Materials used in the examples:

| | |
|---|---|
| RESIN A | RESAMIN HF 480, commercially available from ALLNEX |
| DRYING AGENT A | DESMODUR LD, commercially available from COVESTRO |
| DRYING AGENT B | ADDITIVE OF, commercially available from OMG BORCHERS |
| DRYING AGENT C | DYNASYLAN VTEO, commercially available from EVONIK |
| ADDITIVE A | DISPERBYK 161, commercially available from BYK |
| ADDITIVE B | BYK 141, commercially available from BYK |
| ADDITIVE C | TINUVIN 292, commercially available from BASF |
| ADDITIVE D | KRONOS 2310, commercially available from KRONOS |
| ADDITIVE E | barium sulfate |
| ADDITIVE F | CRAYVALLAC SF, commercially available from PALMER HOLLAND |
| SOLVENT A | n-butyl acetate |
| POLYUREA A | trialkoxysilane-modified polyurea compound |
| CATALYST A | K-KAT, commercially available from KING INDUSTRIES |

### Example 1 - Effect of Non-Reactive Resin

Comparative Sample 1 was prepared by combining ADDITIVES A-F, DRYING AGENT C, POLYUREA A, CATALYST A, and SOLVENT A to form a grinding slurry. The grinding slurry was ground to a Hegman value of 6.

Inventive Sample 1 in the same manner as Comparative Sample 2 by first adding ADDITIVES A-F to non-reactive RESIN A to form a grinding dispersion. The grinding dispersion was ground until a Hegman value of 6 was achieved. SOLVENT A was then added to the ground dispersion and mixed thoroughly to form a slurry. The slurry was then evaluated using Karl Fischer titration (ASTM D6304-16e1) to determine the amount of water in the formulation. Based on the amount of water measured in the slurry, an 10% excess relative to a stoichiometric amount of DRYING AGENT C was added to the slurry and mixed thoroughly to scavenge the water in the slurry. POLYUREA A and CATALYST A were then added to the dried slurry to form the coating composition.

Each of the samples was evaluated for initial viscosity at 23 °C based on ISO 3219:2003 and coated at 0.25 mm ( 10 mils ) wet film thickness to determine hard-dry time based on ASTM D5895-03. The comparative results are illustrated in Table 1 below:

**Table 1**

| Sample | VOCs (g/L) | Initial Viscosity (KU) | Hard Dry Time (hours) |
|---|---|---|---|
| Comparative Sample 1 | 258 | 88.2 (1.069 Pa-s) | 8.25 |
| Inventive Sample 1 | 258 | 74 (0.656 Pa-s) | 7.5 |

As can be seen from Table 1, Inventive Sample 1 had a lower initial viscosity and a faster hard-dry time as compared to Comparative Sample 1.

### Example 2 - Effect of Different Drying Agents

Additional coating compositions were prepared in the same manner as described above with respect to Inventive Sample 1, but using different drying agents. The results are presented below in Table 2:

**Table 2**

| Sample | Drying Agent | VOCs (g/L) | Initial Viscosity (KU) | Hard Dry Time (hours) |
|---|---|---|---|---|
| Inventive Sample 1 | C | 258 | 74 (0.656 Pa-s) | 7.5 |
| Inventive Sample 2 | A | 250 | 84.4 (0.936 Pa-s) | 5.25 |
| Inventive Sample 3 | B | 250 | 68.1 (0.518 Pa-s) | 6 |

As can be seen from Table 2, in each case where the additives are ground on a non-reactive resin and subsequently dried using a drying agent, the initial viscosity and hard-dry times were improved as compared to the Comparative Sample 1.

### Example 3 - Drying Agent Ladder

Various one-component coating compositions were prepared in the same manner as Inventive Sample 1, but using different amounts of drying agent to determine the effect. The amounts of drying agent are reported as wt% based on a total weight of the formulation. The VOC level for each sample was 225 grams/liter. The results are illustrated in Table 3:

**Table 3**

| Sample | Drying Agent | Amount (wt%) | Initial Viscosity (KU) |
|---|---|---|---|
| Comparative Sample 2 | - | - | 89.7 (1.128 Pa-s) |
| Inventive Sample 4 | B | 0.5 | 86.4 (1.005 Pa-s) |
| Inventive Sample 5 | B | 1.7 | 81 (0.833 Pa-s) |
| Inventive Sample 6 | B | 7 | 84.7 (0.946 Pa-s) |
| Inventive Sample 7 | C | 0.33 | 89.2 (1.109 Pa-s) |
| Inventive Sample 8 | C | 0.67 | 87.9 (1.059 Pa-s) |
| Inventive Sample 9 | C | 1.13 | 84.2 (0.930 Pa-s) |

As can be seen in the results presented in Table 3, both of DRYING AGENTS B and C had the effect of decreasing the initial viscosity of the inventive samples as compared to Comparative Sample 2, which did not include any drying agents.

### Example 4 - Stability of Coating Compositions

The viscosity of Comparative Sample 1 and Inventive Sample 3 were monitored over time. Comparative Sample 1 was prepared and immediately placed in an oven at 50 °C after the initial viscosity measurement. In contrast, Inventive Sample 3 was left at room temperature for one week and then placed in an oven at 50 °C for the next weeks. The results are presented in Table 4.

**Table 4**

| Time | Viscosity (KU) | |
|---|---|---|
| | Comparative Sample 1 | Inventive Sample 3 |
| Initial | 88.2 (1.069 Pa-s) | 68.1 (0.518 Pa-s) |
| 1 Day | - | 70.7 (0.577 Pa-s) |
| 2 Days | - | 72 (0.607 Pa-s) |
| 3 Days | - | 76.6 (0.720 Pa-s) |
| 6 Days | - | 78.6 (0.769 Pa-s) |
| 1 Week | 93.3* (1.276 Pa-s) | 79.1 (0.784 Pa-s) |
| 2 Weeks | 93.3* (1.276 Pa-s) | 79.7* (0.799 Pa-s) |
| 3 Weeks | 94.1* (1.310 Pa-s) | 80.1* (0.809 Pa-s) |
| 4 Weeks | 96.9* (1.438 Pa-s) | 81.2* (0.838 Pa-s) |

| | | |
|---|---|---|
| * Measurement taken after incubation in oven at 50 °C. | | |

As can be seen in Table 4, after 4 weeks (including 3 weeks at 50 °C), Inventive Sample 3 still had a lower viscosity than the initial viscosity of Comparative Sample 1, indicating a greater long-term stability of Inventive Sample 3 as compared to Comparative Sample 1.

It should be understood that the above-described examples are only illustrative of some embodiments of the present invention.

## Claims

1. A method of manufacturing a one-component coating composition, comprising:
combining a water-containing additive with a non-reactive resin to form a grinding dispersion;
grinding the grinding dispersion to a Hegman value of at least 4 to form a ground dispersion;
adding a drying agent to form a dried slurry;
adding a silane-modified polyurea to the dried slurry to form a one-component coating composition.

2. The method of claim 1, wherein the non-reactive resin comprises a carbamic resin based on butylurethane and formaldehyde.

3. The method of claim 1, wherein the non-reactive resin is present in the coating composition in an amount of from 5 wt% to 25 wt% based on a total resin weight of the coating composition.

4. The method of claim 1, wherein, prior to combining with the water-containing additive, the non-reactive resin is diluted to a solids content of from 40 wt% to 95 wt% based on a combined weight of non-reactive resin and diluent.

5. The method of claim 1, wherein the water-containing additive comprises a pigment.

6. The method of claim 1, wherein the drying agent comprises an orthoformate, a bifunctional organosilane, HDI monomer, IPDI monomer, an HDI-based isocyanate having a number average functionality of less than or equal to 2, or a combination thereof.

7. The method of claim 1, further comprising adding a solvent to the ground dispersion to form a ground slurry.

8. The method of claim 1, wherein the silane-modified polyurea is based on isophorone diisocyanate comprising both isocyanurate and allophanate groups.

9. The method of claim 1, wherein the silane-modified polyurea is based on an aminosilane of formula (I)
R¹ₐ(R¹O)₍₃₋ₐ₎Si(CH₂)ₙNHCHR²CH₂COOR³ (I)
where the radicals R¹ are independently selected from C₁-C₂₀-alkyl or C₆-C₂₀-aryl,
a is an integer between 0 and 2,
n is an integer between 1 and 4,
R² is selected from H, C₁-C₂₀-alkyl, C₆-C₁₂-aryl, or -COOR³, and
R³ is C₁-C₂₀-alkyl.

10. The method of claim 1, wherein one-component coating composition has an initial viscosity of from 60 KU (0.3485 Pa-s) to 100 KU (1.595 Pa-s) at 23 °C based on ISO 3219:2003.

## Patentansprüche

1. Verfahren zur Herstellung einer einkomponentigen Beschichtungszusammensetzung, umfassend:
Kombinieren eines wasserhaltigen Additivs mit einem nichtreaktiven Harz, um eine Mahldispersion zu bilden;
Mahlen der Mahldispersion auf einen Hegman-Wert von wenigstens 4, um eine gemahlene Dispersion zu bilden;
Zugeben eines Trocknungsmittels, um eine getrocknete Aufschlämmung zu bilden;
Zugeben eines silanmodifizierten Polyharnstoffs zu der getrockneten Aufschlämmung, um eine einkomponentige Beschichtungszusammensetzung zu bilden.

2. Verfahren nach Anspruch 1, wobei das nichtreaktive Harz ein Karbamidharz auf Basis von Butylurethan und Formaldehyd umfasst.

3. Verfahren nach Anspruch 1, wobei das nichtreaktive Harz in der Beschichtungszusammensetzung in einer Menge von 5 Gew.-% bis 25 Gew.-%, bezogen auf ein Gesamtharzgewicht der Beschichtungszusammensetzung, vorhanden ist.

4. Verfahren nach Anspruch 1, wobei vor Kombinieren mit dem wasserhaltigen Additiv das nichtreaktive Harz auf einen Feststoffgehalt von 40 Gew.-% bis 95 Gew.-%, bezogen auf ein kombiniertes Gewicht von nichtreaktivem Harz und Verdünnungsmittel, verdünnt wird.

5. Verfahren nach Anspruch 1, wobei das wasserhaltige Additiv ein Pigment umfasst.

6. Verfahren nach Anspruch 1, wobei das Trocknungsmittel ein Orthoformiat, ein bifunktionelles Organosilan, ein HDI-Monomer, ein IPDI-Monomer, ein Isocyanat auf HDI-Basis mit einer zahlenmittleren Funktionalität von weniger als oder gleich 2 oder eine Kombination davon umfasst.

7. Verfahren nach Anspruch 1, ferner umfassend Zugeben eines Lösungsmittels zu der gemahlenen Dispersion, um eine gemahlene Aufschlämmung zu bilden.

8. Verfahren nach Anspruch 1, wobei der silanmodifizierte Polyharnstoff auf Isophorondiisocyanat basiert, das sowohl Isocyanurat- als auch Allophanatgruppen umfasst.

9. Verfahren nach Anspruch 1, wobei der silanmodifizierte Polyharnstoff auf einem Aminosilan der Formel (I) basiert,
R¹ₐ(R¹O)₍₃₋ₐ₎Si(CH₂)ₙNHCHR²CH₂COOR³ (I)
wobei die Reste R¹ unabhängig ausgewählt sind aus C₁-C₂₀-Alkyl und C₆-C₂₀-Aryl,
a eine ganze Zahl zwischen 0 und 2 ist,
n eine ganze Zahl zwischen 1 und 4 ist,
R² ausgewählt ist aus H, C₁-C₂₀-Alkyl, C₆-C₁₂-Aryl und - COOR³, und
R³ C₁-C₂₀-Alkyl ist.

10. Verfahren nach Anspruch 1, wobei die einkomponentige Beschichtungszusammensetzung eine Anfangsviskosität von 60 KU (0,3485 Pa-s) bis 100 KU (1,595 Pa-s) bei 23 °C nach ISO 3219:2003 aufweist.

## Revendications

1. Procédé de fabrication d'une composition de revêtement à un constituant, comprenant :
combinaison d'un additif contenant de l'eau avec une résine non réactive pour former une dispersion de broyage ;
broyage de la dispersion de broyage jusqu'à une valeur de Hegman d'au moins 4 pour former une dispersion broyée ;
ajout d'un agent séchant pour former une suspension séchée ;
ajout d'une polyurée modifiée par un silane à la suspension séchée pour former une composition de revêtement à un constituant.

2. Procédé selon la revendication 1, dans lequel la résine non réactive comprend une résine carbamique à base de butyluréthane et de formaldéhyde.

3. Procédé selon la revendication 1, dans lequel la résine non réactive est présente dans la composition de revêtement en une quantité de 5 % en poids à 25 % en poids sur la base du poids total de résine de la composition de revêtement.

4. Procédé selon la revendication 1, dans lequel, avant la combinaison avec l'additif contenant de l'eau, la résine non réactive est diluée jusqu'à une teneur en solides de 40 % en poids à 95 % en poids sur la base d'un poids combiné de résine non réactive et de diluant.

5. Procédé selon la revendication 1, dans lequel l'additif contenant de l'eau comprend un pigment.

6. Procédé selon la revendication 1, dans lequel l'agent séchant comprend un orthoformiate, un organosilane bifonctionnel, un monomère HDI, un monomère IPDI, un isocyanate à base de HDI ayant une fonctionnalité moyenne en nombre inférieure ou égale à 2, ou une combinaison de ceux-ci.

7. Procédé selon la revendication 1, comprenant en outre l'ajout d'un solvant à la dispersion broyée pour former une suspension broyée.

8. Procédé selon la revendication 1, dans lequel la polyurée modifiée par un silane est à base de diisocyanate d'isophorone comprenant à la fois des groupes isocyanurate et allophanate.

9. Procédé selon la revendication 1, dans lequel la polyurée modifiée par un silane est à base d'un aminosilane de formule (I)
R¹ₐ(R¹O)₍₃₋ₐ₎Si(CH₂)ₙNHCHR²CH₂COOR³ (I)
où les radicaux R¹ sont indépendamment choisis parmi alkyle en C₁-C₂₀ ou aryle en C₆-C₂₀,
a est un entier entre 0 et 2,
n est un entier entre 1 et 4,
R² est choisi parmi H, alkyle en C₁-C₂₀, aryle en C₆-C₁₂, ou -COOR³, et
R³ est alkyle en C₁-C₂₀.

10. Procédé selon la revendication 1, dans lequel la composition de revêtement à un constituant a une viscosité initiale de 60 KU (0,3485 Pa-s) à 100 KU (1,595 Pa-s) à 23 °C sur la base de la norme ISO 3219:2003.
